# EUROPÄISCHE PATENTSCHRIFT

(11) **EP 0 773 140 B1**
(45) Veröffentlichungstag und Bekanntmachung des Hinweises auf die Patenterteilung: **10.01.2001**
(21) Anmeldenummer: 96115793.0
(22) Anmeldetag: 02.10.1996
(51) Int. Cl.: B60R 21/16, D03D 1/02, D01F 6/84

(54) **Schwerentflammbare Gewebe enthaltend phosphor-modifizierte Polyesterfasern, Airbags daraus und deren Verwendung**
Flame retardant fabrics containing phosphorus-modified polyester fibres, airbags therefrom and their use
Tissus résistants à la flamme contenant des fibres de polyester modifiées par du phosphore, airbags à partir de ceux-ci et leur utilisation

(30) Priorität: 11.10.1995 DE 19537699
(43) Veröffentlichungstag der Anmeldung: 14.05.1997
(73) Patentinhaber: ARTEVA TECHNOLOGIES S.à.r.l., 8001 Zürich (CH)
(72) Erfinder: Bönigk, Burkhard, Dr., 86399 Königsbrunn (DE)
(74) Vertreter: Zounek, Nikolai, Dipl.-Ing.

(56) Entgegenhaltungen:
- EP-A- 0 442 373
- EP-A- 0 453 678
- EP-A- 0 478 897
- EP-A- 0 509 399
- EP-A- 0 661 393
- DATABASE WPI Section Ch, Week 9509 Derwent Publications Ltd., London, GB; Class A23, AN 95-064057 XP002026245 & JP 06 341 030 A (TORAY IND INC) , 13.Dezember 1994
- DATABASE WPI Section Ch, Week 9135 Derwent Publications Ltd., London, GB; Class A23, AN 91-256753 XP002026246 & JP 03 167 312 A (TORAY IND INC) , 19.Juli 1991
- DATABASE WPI Section Ch, Week 9534 Derwent Publications Ltd., London, GB; Class A23, AN 95-261754 XP002026247 & JP 07 166 422 A (KURARAY CO LTD) , 27.Juni 1995

## Beschreibung

Die vorliegende Erfindung betrifft schwerentflammbare Gewebe mit hoher Gasdichtigkeit, Airbags enthaltend diese Gewebe sowie die Verwendung dieser Gewebe zur Herstellung von Airbags.

Airbags werden bei einem Unfall explosionsartig aufgeblasen und sollen die Insassen von Fahrzeugen, insbesondere Fahrer von Automobilen, vor Aufprall-Verletzungen schützen. Airbags werden zum Teil aus gasundurchlässigen, beschichteten Geweben hergestellt, welche auf einer Seite des Sackes ein gasdurchlässiges Filtergewebe oder Filtergewebesegment oder eine Öffnung enthalten.

Bei der Entwicklung von sicherheitsrelevanten textilen Bauteilen für das Automobil steht die Festigkeit im Vordergrund. Wird bei einem Unfall aber der Airbag ausgelöst, so verbleibt dieser als relativ große textile Oberflächen im Inneren des Fahrzeuges. Im Brandfall bildet dieser eine Gefahr für die Insassen, ähnlich wie dies von Vorhängen im Wohnbereich bekannt ist. Aus der JP-A-91-167,312 sind schwerentflammbare Polyesterfasern zur Herstellung von Geweben bekannt, die sich ihrerseits zur Herstellung von Airbags eignen. Die Offenbarung in dieser Schrift beschreibt lediglich Airbags aus beschichteten Geweben. Derartige Gewebe brauchen von Haus aus nicht besonders gasdicht zu sein, da die Gasdichtigkeit hauptsächlich durch die Beschichtung erzielt wird.

Nach dem einzigen Beispiel in dieser Schrift beträgt der Titer der eingesetzten Garne dtex 833 f 96, der Filamenteinzeltiter beträgt demnach 8,7 dtex.

Es wurde bereits vorgeschlagen, unbeschichtete Gewebe zur Herstellung von Airbags einzusetzen, beispielsweise in der EP-A-453,678, in der EP-B-442,373 oder in der EP-B-509,399. Diese Gewebe sind aufgrund ihres feinen Garn- und Einzeltiters höher flammgefährdet als Gewebe aus gröberen Garn- und Einzeltitern. Hinweise auf den Einsatz schwerbrennbarer Gewebe zur Herstellung von Airbags sind diesen Schriften nicht zu entnehmen.

Aus der EP-A-661,393 sind hochfeste und schwerentflammbare Polyestergarne bekannt. Dieser Schrift sind keine Hinweise auf den Einsatz dieser Garne zur Herstellung schwerentflammbarer und dicht eingestellter Gewebe zu entnehmen.

Im Hinblick auf die steigenden Sicherheitsanforderungen in Kraftfahrzeugen besteht immer noch ein Bedarf an schwerbrennbaren, unbeschichtet einsetzbaren und gasdichten Geweben, welche ihrerseits bei der Herstellung von Airbags eingesetzt werden können.

Es ist deshalb Aufgabe der vorliegenden Erfindung, Gewebe für die Herstellung von Airbags zur Verfügung zu stellen, die die notwendigen sicherheitsrelevanten Eigenschaften bekannter Gewebe aufweisen und darüber hinaus noch flammhemmende Eigenschaften aufweisen. Beim Airbag ist dies, je nach Konstruktion für den gasdichten und den gasdurchlässigen Teil von Bedeutung.

Es wurden nun überraschend gefunden, daß derartige Gewebe sich durch die Verwendung von schwerbrennbaren und phosphor-modifizierten Polyesterfilamenten herstellen lassen.

Die Erfindung betrifft unbeschichtete Gewebe, die eine Gasdurchlässigkeit von kleiner gleich 80 dm³ Luft pro Minute pro Quadratdezimeter bei einem Druckabfall von 500 Pa (gemessen nach DIN 53 887) aufweisen, und die mindestens zwei Fadensysteme parallellaufender Fäden aus hochfesten Filamentgarnen aus Polyester mit einem Garntiter von 150 bis 700 dtex, vorzugweise von 220 bis 550 dtex, sowie mit einem Einzelfasertiter von kleiner gleich 7, vorzugsweise von kleiner gleich 4 dtex aufweisen.

Die erfindungsgemäßen Gewebe sind dadurch gekennzeichnet, daß die Gewebe vollständig oder nur teilweise aus hochfesten und phosphor-modifizierten Filamentgarnen aus Polyester aufgebaut sind wobei der Polyester ein phosphor-modifizierter Copolyester ist, die wiederkehrenden Struktureinheiten der Formel I

-O-OC-Ar¹-CO-O-R¹- (I)

enthält und in der Polymerkette Baugruppen der Formel II 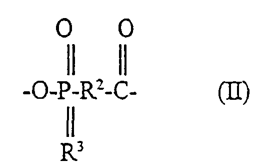 aufweist, worin
- Ar¹: einen zweiwertigen ein- oder mehrkettigen aromatischen Rest darstellt,
- R¹: ein zweiwertiger aliphatischer oder cycloaliphatischer Rest ist,
- R²: ein zweiwertiger aliphatischer, cycloaliphatischer, aromatischer oder araliphatischerRest ist, und
- R³: einen einwertigen aliphatischen, cycloaliphatischen oder araliphatischen Rest bedeutet, und daß der phosphor-modifizierte Copolyester die bifunktionelle Phosphorverbindung der Formel (II) in einer Menge von 0,1 bis 5 Gew.-%, vorzugsweise von 0,2 bis 0,8 Gew.-%, bezogen auf die Menge an Phosphor, in der Polymerkette enthält.

Die erfindungsgemäßen Gewebe können zu einem geringeren Anteil oder vollständig aus den oben definierten hochfesten und phosphor-modifizierten Filamentgarnen bestehen. So ist es beispielsweise möglich nur eines der die erfindungsgemäßen Gewebe aufbauenden Fadensysteme ganz oder auch nur zum Teil aus diesen Garnen aufzubauen. Der Fachmann kann die im Einzelfall notwendige Menge an den oben definierten hochfesten und phosphor-modifizierten Filamentgarnen, beispielsweise sich an der gewünschten Festigkeit der Gewebe orientierend, anhand von Routineversuchen ermitteln.

Durch den Einsatz der phosphor-modifizierten Polyesterfasern läßt sich die Schwerentflammbarkeit der daraus hergestellten Gewebe vergrößern. Unter einem schwerentflammbaren Gewebe im Sinne dieser Beschreibung ist ein Rohgewebe zu verstehen, das bei der Brennbarkeitsprüfung nach DIN 4102/B2 eine Gesamt-Brennzeit hat, die mindestens um den Faktor 5, vorzugsweise um den Faktor 10 kürzer ist als die eines vergleichbaren Rohgewebes aus nichtphosphormodifiziertem Polyester und bei dem nach DIN 54336 bei 3 und 15 Sekunden Beflammung und nach DIN 54333 bei 3 Sekunden Beflammung kein Nachbrennen auftritt.

Neben den oben definierten hochfesten und phosphor-modifizierten Filamentgarnen kann ein Teil der die Gewebe aufbauenden Garne aus nichtphosphor-modifizierten und hochfesten Filamentgarnen bestehen.

Bevorzugt ist zumindest eine Richtung, z.B. die Schuß- oder die Kettrichtung, der erfindungsgemäßen Gewebe vollständig aus den oben definierten hochfesten und phosphor-modifizierten Filamentgarnen aufgebaut; besonders bevorzugt sind beide Richtungen aus derartigen Filamentgarnen aufgebaut.

Die erfindungsgemäßen Gewebe können aus zwei oder mehr Fadensystemen bestehen; vorzugsweise sind zwei Fadensysteme vorgesehen (Kett- und Schußfadenscharen).

Ganz besonders bevorzugt werden Gewebe, die aus zwei Fadensystemen bestehen, welche jeweils zu mindestens 95 % aus den oben definierten hochfesten und phosphor-modifizierten Filamentgarnen bestehen.

Die Gasdurchlässigkeit der erfindungsgemäßen Gewebe kann in weiten Grenzen variiert werden.

Im sogenannten gasdichten Teil beträgt die Gasdurchlässigkeit üblicherweise kleiner gleich 12 dm³ Luft pro Minute pro Quadratdezimeter bei einem Druckabfall von 500 Pa (gemessen nach DIN 53 887). Im sogenannten gasdurchlässigen Teil beträgt die Gasdurchlässigkeit üblicherweise 12 bis 80 dm³ Luft pro Minute pro Quadratdezimeter bei einem Druckabfall von 500 Pa (gemessen nach DIN 53887).

Die Messung der Gasdurchlässigkeit erfolgt in Anlehnung an DIN 53 887 an einem Gewebe mit 100 cm² Meßfläche und bei einem Druckabfall (Meßdruck) von 500 Pa.

Besonders bevorzugt werden unbeschichtete Gewebe, wie oben definiert, deren hochfeste Polyestergarne eine feinheitsbezogene Höchstzugkraft von mehr als 55 cN/tex und eine Höchstzugkraftdehnung von mehr als 15 % besitzen.

Die Messung der Höchstzugkraft und der Höchstzugkraftdehnung der zum Einsatz kommenden Polyestergarne erfolgt in Anlehnung an DIN 53 830, Teil 1.

Besonders bevorzugt werden unbeschichtete Gewebe, wie oben definiert, deren hochfeste Polyestergarne einen Thermoschrumpf bei 200 °C von weniger als 9 % besitzt.

Die Messung des Thermoschrumpfes (Heißluftschrumpf) der zum Einsatz kommenden Polyestergarne erfolgt in Anlehnung an DIN 53 866, Teil 3 bei einer Temperatur von 200 °C an freihängenden Garnproben bei einer Behandlungszeit von 15 Minuten. Eingesetzt werden 10 m Strang bei einer Haspelspannung von 0,5 cN/tex.

Besonders bevorzugt werden unbeschichtete Gewebe, wie oben definiert, deren hochfeste Polyestergarne schlichtefrei sind.

Die erfindungsgemäßen unbeschichteten Gewebe weisen vorzugsweise eine Leinwandbindung, eine Ripstopbindung, eine Kreuzköperbindung, eine Kreppbindung oder eine modifizierte Gerstenkornbindung auf.

Die Ermittlung der Gewebeeinstellung erfolgt nach DIN 53 853.

Gewebe mit diesen Bindungen sind an sich bekannt, beispielsweise aus den EP-B-442,373 und EP-B-509,399, deren Beschreibungen auch Inhalt der vorliegenden Beschreibung sind.

Vorzugsweise besitzen die erfindungsgemäßen unbeschichteten Gewebe ein Flächengewicht von weniger als 300 g/m², vorzugsweise von weniger als 240 g/m² und eine Gewebedicke von weniger als 0,45 mm, vorzugsweise von weniger als 0,35 mm.

Die Messung des Flächengewichtes der erfindungsgemäßen Gewebe erfolgt nach DIN 53 854; die Messung der Dicke der erfindungsgemäßen Gewebe erfolgt in Anlehnung an DIN 53 855, Teil 1 (Meßfläche 10 cm²; Meßdruck 50 cN/cm²).

Die Höchstzugkraft der erfindungsgemäßen unbeschichteten Gewebe beträgt vorzugsweise mehr als 220 daN; und deren Höchstzugkraftdehnung beträgt vorzugsweise mehr als 25 %, beide Werte jeweils gemessen an einem 5 cm breiten Gewebestreifen.

Die in den erfindungsgemäßen Geweben zum Einsatz gelangenden hochfesten Filamentgarne enthalten Polyesterfilamente, die aus einem phosphormodifizierter Copolyester aufgebaut sind.

Besonders bevorzugt verwendet werden modifizierte Polyester des oben gekennzeichneten Typs, worin Ar¹ Phenylen oder Naphthylen bedeutet, insbesondere 1,4-Phenylen oder 2,6-Naphthylen.

Ebenfalls besonders bevorzugt verwendet werden modifizierte Polyester des oben gekennzeichneten Typs, worin R¹ einen Rest der Formel -CₙH₂ₙ- darstellt, worin n eine ganze Zahl zwischen 2 und 6 ist, insbesondere Ethylen, oder einen von Cyclohexandimethanol abgeleiteten Rest darstellt.

Ebenfalls besonders bevorzugt verwendet werden modifizierte Polyester des oben gekennzeichneten Typs, worin R² einen Rest der Formel -CₘH₂ₘ-, worin m eine ganze Zahl zwischen 2 und 10 ist, oder einen cyclischen Alkandiylrest mit 4 bis 8, vorzugsweise mit 6 Kohlenstoffatomen bedeutet und daß R³ C₁-C₆Alkyl, Cyclohexyl, Phenyl, oder Benzyl bedeutet.

Bedeuten in den oben definierten Strukturformeln irgendwelche Reste zweiwertige aliphatische Reste, so ist darunter verzweigtes und insbesondere geradkettiges Alkylen zu verstehen, beispielsweise Alkylen mit zwei bis zwanzig, vorzugsweise mit zwei bis acht Kohlenstoffatomen. Beispiele für derartige Reste sind Ethan-1,2-diyl, Propan-1,3-diyl, Butan-1,4-diyl, Pentan-1,5-diyl, Hexan-1,6-diyl oder Octan-1,8-diyl.

Bedeuten in den oben definierten Strukturformeln irgendwelche Reste zweiwertige cycloaliphatische Reste, so sind darunter Gruppen zu verstehen, die carbocyclische Reste mit fünf bis acht, vorzugsweise sechs Ringkohlenstoffatomen enthalten. Beispiele für derartige Reste sind Cyclohexan-1,4-diyl oder die Gruppe -CH₂-C₆H₁₀-CH₂-.

Bedeuten in den oben definierten Strukturformeln irgendwelche Reste zweiwertige aromatische Reste, so handelt es sich dabei um heterocyclisch-aromatische Reste, die ein- oder mehrkernig sein können, oder insbesondere um ein- oder mehrkernige aromatische Kohlenwasserstoffreste. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über Brückengruppen, wie -O-, -S-, -CO- oder -CO-NH- Gruppen miteinander verbunden sein.

Die Valenzbindungen der zweiwertigen aromatischen Reste können sich in para- oder in vergleichbarer koaxialer oder paralleler Position zueinander befinden, oder auch in meta- oder in vergleichbarer gewinkelter Position zueinander.

Die Valenzbindungen, die in koaxialer oder parallel zueinander befindlicher Stellung stehen, sind entgegengesetzt gerichtet. Ein Beispiel für koaxiale, entgegengesetzt gerichtete Bindungen sind die Biphen-4,4'-diyl Bindungen. Ein Beispiel für parallel, entgegengesetzt gerichtete Bindungen sind die Naphthalin-1,5- oder -2,6-Bindungen, während die Naphthalin-1,8-Bindungen parallel gleichgerichtet sind.

Beispiele für bevorzugte zweiwertige aromatische Reste, deren Valenzbindungen sich in para- oder in vergleichbarer koaxialer oder paralleler Position zueinander befinden, sind einkernige aromatische Reste mit zueinander para-ständigen freien Valenzen, insbesondere 1,4-Phenylen oder zweikernige kondensierte aromatische Reste mit parallelen, entgegengesetzt gerichteten Bindungen, insbesondere 1,4-, 1,5- und 2,6-Naphthylen, oder zweikernige über eine C-C Bindung verknüpfte aromatische Reste mit koaxialen, entgegengesetzt gerichteten Bindungen, insbesondere 4,4'-Biphenylen.

Beispiele für bevorzugte zweiwertige aromatische Reste, deren Valenzbindungen sich in meta- oder in vergleichbarer gewinkelter Position zueinander befinden, sind einkernige aromatische Reste mit zueinander meta-ständigen freien Valenzen, insbesondere 1,3-Phenylen oder zweikernige kondensierte aromatische Reste mit zueinander gewinkelt gerichteten Bindungen, insbesondere 1,6- und 2,7-Naphthylen, oder zweikernige über eine C-C Bindung verknüpfte aromatische Reste mit zueinander gewinkelt gerichteten Bindungen, insbesondere 3,4'-Biphenylen.

Bedeuten irgendwelche Reste zweiwertige araliphatische Reste, so sind darunter Gruppen zu verstehen, die einen oder mehrere zweiwertige aromatische Reste enthalten, welche über eine oder beide Valenzen mit einem Alkylenrest kombiniert sind. Ein bevorzugtes Beispiel für einen derartigen Rest ist die Gruppe -C₆H₄-CH₂-.

Bedeuten irgendwelche Reste einwertige aliphatische Reste, so ist darunter verzweigtes und insbesondere geradkettiges Alkyl zu verstehen, beispielsweise Alkyl mit ein bis sechs Kohlenstoffatomen, insbesondere Methyl.

Bedeuten irgendwelche Reste einwertige cycloaliphatische Reste, so sind darunter Gruppen zu verstehen, die carbocyclische Reste mit fünf bis acht, vorzugsweise sechs Ringkohlenstoffatomen enthalten. Ein Beispiel für einen derartigen Rest ist Cyclohexyl.
Bedeuten irgendwelche Reste einwertige aromatische Reste, so handelt es sich dabei um heterocyclisch-aromatische Reste, die ein- oder mehrkernig sein können, oder insbesondere um ein- oder mehrkernige aromatische Kohlenwasserstoffreste. Im Falle von heterocyclisch-aromatischen Resten weisen diese insbesondere ein oder zwei Sauerstoff-, Stickstoff- oder Schwefelatome im aromatischen Kern auf. Ein Beispiel für einen derartigen Rest ist Phenyl oder Naphthyl.

Bedeuten irgendwelche Reste einwertige araliphatische Reste, so sind darunter Gruppen zu verstehen, die einen oder mehrere aromatische Reste enthalten, welche über eine Valenz mit einem Alkylenrest kombiniert sind. Ein bevorzugtes Beispiel für einen derartigen Rest ist die Benzylgruppe.

Alle diese aliphatischen, cycloaliphatischen, aromatischen oder araliphatischen Reste können mit inerten Gruppen substituiert sein. Darunter sind Substituenten zu verstehen, die die ins Auge gefaßte Anwendung nicht negativ beeinflussen.

Beispiele für solche Substituenten sind Alkyl, Alkoxy oder Halogen.

Bedeuten irgendwelche Reste Halogen, so handelt es sich dabei beispielsweise um Fluor, Brom oder insbesondere um Chlor.

Besonders bevorzugt handelt es sich bei den erfindungsgemäß zum Einsatz kommenden Filamentgarnen um Filamentgarne aus phospor-modifiziertem Polyethylenterephthalat.

Die im erfindungsgemäßen Gewebe zum Einsatz kommenden hochfesten Filamentgarne können aus modifizierten Polyestern aufgebaut sein, die üblicherweise eine intrinsische Viskosität von mindestens 0,5 dl/g, vorzugsweise 0,6 bis 1,5 dl/g aufweisen. Die Messung der intrinsischen Viskosität erfolgt in einer Lösung des Polyesters in Dichloressigsäure bei 25 °C.

Die erfindungsgemäß eingesetzten hochfesten Filamentgarne weisen üblicherweise Garntiter von 150 bis 700 dtex, vorzugweise von 220 bis 550 dtex.

Der Einzelfasertiter der Filamente in den erfindungsgemäß eingesetzten hochfesten Filamentgarnen bewegt sich üblicherweise im Bereich von kleiner gleich 7 dtex, vorzugsweise von kleiner gleich 5 dtex, insbesondere von 2 bis 4 dtex.

Die Querschnitte der Filamente in den erfindungsgemäß eingesetzten hochfesten Filamentgarnen können beliebig sein; beispielsweise ellipsenförmig, bi- oder multilobal, bändchenförmig oder vorzugsweise rund.

Die erfindungsgemäß eingesetzten hochfesten Filamentgarne aus phosphor-modifizierten Polyestern sind ebenfalls als Festigkeits- und Beschichtungsträger an sich bekannt, beispielsweise aus der EP-A-661,393, deren Beschreibung auch Inhalt der vorliegenden Beschreibung ist.

Die Herstellung der thermoplastischen Polymeren erfolgt nach an sich bekannten Verfahren durch Polykondensation der entsprechenden bifunktionellen Monomerkomponenten, wie z.B. in der oben erwähnten EP-A-661,393 beschrieben.

Die Herstellung der hochfesten Filamente kann nach an sich bekannten Schmelzspinnverfahren erfolgen, wie z.B. in der oben erwähnten EP-A-661,393 beschrieben.

Die erfindungsgemäßen Gewebe können durch an sich bekannte Webtechniken hergestellt werden, wie dies beispielsweise in den oben erwähnten EP-B-442,373 und EP-B-509,399 beschrieben worden ist, deren Beschreibungen auch Gegenstand der vorliegenden Beschreibung sind.

Falls eine möglichst geringe Luftdurchlässigkeit erwünscht ist - wie dies insbesondere für den Mantelbereich des Airbags erwünscht ist, sollte das Gewebe eine - für den gewählten Garntiter und die gewählte Gewebekonstruktion - maximal dichte Gewebeeinstellung besitzen, d.h., daß das Gewebe, vorzugsweise in einer Leinwand- oder Ripstopkonstruktion, die beim Weben maximal mögliche Fadenzahl pro Längeneinheit in Kett- und Schußrichtung erhalten soll.

Die Fadendichten mindestens eines der Fadensysteme der erfindungsgemäßen Gewebe betragen üblicherweise wenigstens 15 Fäden pro Zentimeter, vorzugsweise wenigstens 20 Fäden pro Zentimeter.

Gegenstand der Erfindung sind ebenfalls Airbags enthaltend ein unbeschichtetes und schwerentflammbares Gewebe, wie oben definiert.

Gewebe für diesen Einsatzzweck weisen vorzugsweise eine Berstfestigkeit nach Mullen von größer gleich 3500 kPa, eine Höchstzugkraft von größer gleich 1300 N, je 5 cm Gewebebreite, eine Weiterreißfestigkeit, gemessen nach der Schenkelmethode, von größer gleich 100 N, und eine Höchstzugkraftdehnung von größer gleich 20 % auf.

Die aufgeführten Eigenschaften werden dabei wie folgt ermittelt:
Berstfestigkeit nach Mullen: Federal Test Method Standard No:
191A, Method 5122
Höchstzugkraft: nach DIN 53 857, Teil 1
Weiterreißfestigkeit (Schenkelmethode): in Anlehnung an
DIN 53 356 (Probengröße 150 mm * 200 mm geschlaucht;
Auswertung nach DIN 53539, B)
Höchstzugkraftdehnung: nach DIN 53 857, Teil 1

Die Erfindung betrifft desweiteren die Verwendung der oben definierten Gewebe zur Herstellung von Airbags.

## Patentansprüche

1. Unbeschichtetes Gewebe, das eine Gasdurchlässigkeit von kleiner gleich 80 dm³ Luft pro Minute pro Quadratdezimeter bei einem Druckabfall von 500 Pa (gemessen nach DIN 53 887) aufweist, und das mindestens zwei Fadensysteme parallellaufender Fäden aus hochfesten Filamentgarnen aus Polyester mit einem Garntiter von 150 bis 700 dtex, sowie mit einem Einzelfasertiter von kleiner gleich 7 dtex aufweist, dadurch gekennzeichnet, daß das Gewebe vollständig oder nur teilweise aus hochfesten und phosphor-modifizierten Filamentgarnen aus Polyester aufgebaut ist, wobei der Polyester ein phosphor-modifizierter Copolyester ist, die wiederkehrenden Struktureinheiten der Formel I
-O-OC-Ar¹-CO-O-R¹- (I)
enthält und in der Polymerkette Baugruppen der Formel II 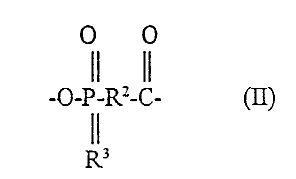 aufweist, worin
Ar¹ einen zweiwertigen ein- oder mehrkernigen aromatischen Rest darstellt,
R¹ ein zweiwertiger aliphatischer oder cycloaliphatischer Rest ist,
R² ein zweiwertiger aliphatischer, cycloaliphatischer, aromatischer oder araliphatischer Rest ist, und
R³ einen einwertigen aliphatischen, cycloaliphatischen oder araliphatischen Rest bedeutet, und daß der phosphor-modifizierte Copolyester die bifunktionelle Phosphorverbindung der Formel (II) in einer Menge von 0,1 bis 5 Gew.-%, vorzugsweise von 0,2 bis 0,8 Gew.-%, bezogen auf die Menge an Phosphor, in der Polymerkette enthält.

2. Unbeschichtete Gewebe nach Anspruch 1, dadurch gekennezeichnet, daß deren Gasdurchlässigkeit 12 bis 80 dm³ Luft pro Minute pro Quadratdezimeter bei einem Druckabfall von 500 Pa (gemessen nach DIN 53887) ist.

3. Unbeschichtete Gewebe nach Anspruch 1, dadurch gekennezeichnet, daß deren Gasdurchlässigkeit kleiner gleich 12 dm³ Luft pro Minute pro Quadratdezimeter bei einem Druckabfall von 500 Pa (gemessen nach DIN 53887) ist.

4. Unbeschichtete Gewebe nach Anspruch 1, dadurch gekennzeichnet, daß diese aus zwei Fadensystemen bestehen, welche jeweils zu mindestens 95 % aus hochfesten Filamentgarnen aus phosphor-modifiziertem Copolyester bestehen.

5. Unbeschichtete Gewebe nach Anspruch 1, dadurch gekennzeichnet, daß das hochfeste Polyestergarn eine feinheitsbezogene Höchstzugkraft von mehr als 55 cN/tex und eine Höchstzugkraftdehnung von mehr als 15 % besitzt.

6. Unbeschichtete Gewebe nach Anspruch 1, dadurch gekennzeichnet, daß das hochfeste Polyestergarn einen Thermoschrumpf bei 200 °C von weniger als 9 % besitzt.

7. Unbeschichtete Gewebe nach Anspruch 1, dadurch gekennzeichnet, daß das hochfeste Polyestergarn schlichtefrei ist.

8. Unbeschichtete Gewebe nach Anspruch 1, dadurch gekennzeichnet, daß diese eine Leinwandbindung, eine Ripstopbindung, eine Kreuzköperbindung, eine Kreppbindung oder eine modifizierte Gerstenkornbindung aufweisen.

9. Unbeschichtete Gewebe nach Anspruch 1, dadurch gekennzeichnet, daß diese ein Flächengewicht von weniger als 300 g/m² und eine Gewebedicke von weniger als 0,45 mm besitzen.

10. Unbeschichtete Gewebe nach Anspruch 1, dadurch gekennzeichnet, daß diese eine Höchstzugkraft von mehr als 220 daN und eine Höchstzugkraftdehnung von mehr als 25 %, beides gemessen an einem 5 cm breiten Gewebestreifen, besitzen.

11. Unbeschichtete Gewebe nach Anspruch 1, dadurch gekennzeichnet, daß Ar¹ Phenylen oder Naphthylen bedeutet, insbesondere 1,4-Phenylen oder 2,6-Naphthylen.

12. Unbeschichtete Gewebe nach Anspruch 1, dadurch gekennzeichnet, daß R¹ einen Rest der Formel -CₙH₂ₙ-, worin n eine ganze Zahl zwischen 2 und 6 ist, insbesondere Ethylen, oder einen von Cyclohexandimethanol abgeleiteten Rest darstellt.

13. Unbeschichtete Gewebe nach Anspruch 1, dadurch gekennzeichnet, daß R² einen Rest der Formel -CₘH₂ₘ-, worin m eine ganze Zahl zwischen 2 und 10 ist, oder einen cyclischen Alkandiylrest mit 4 bis 8, vorzugsweise mit 6 Kohlenstoffatomen bedeutet und daß R³ C₁-C₆Alkyl, Cyclohexyl, Phenyl, oder Benzyl bedeutet.

14. Airbag enthaltend ein unbeschichtetes Gewebe nach Anspruch 1.

15. Verwendung des Gewebes nach Anspruch 1 zur Herstellung von Airbags.

## Claims

1. An uncoated fabric which has a gas permeability of less than or equal to 80 dm³ of air per minute per square decimeter at a pressure drop of 500 Pa (measured as specified in DIN 53 887), and which has at least two thread systems of parallel threads made of high-tenacity polyester filament yarns and having a yarn linear density of 150 to 700 dtex, and having an individual filament linear density of less than or equal to 7 dtex, wherein the fabric is completely or only partly made up of high-tenacity and phosphorus-modified polyester filament yarns, the polyester being a phosphorus-modified copolyester containing repeating structural units of the formula I
-O-OC-Ar¹-CO-O-R¹- (I)
and having in the polymer chain components of the formula II 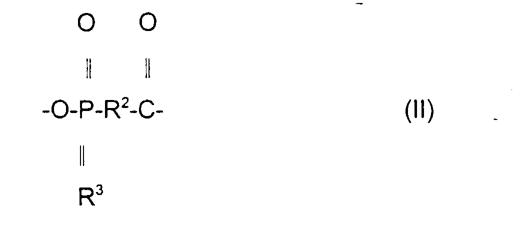 in which
Ar¹ is a divalent mononuclear or polynuclear aromatic radical,
R¹ is a divalent aliphatic or cycloaliphatic radical,
R² is a divalent aliphatic, cycloaliphatic, aromatic or araliphatic radical, and
R³ is a monovalent aliphatic, cycloaliphatic or araliphatic radical,
and wherein the phosphorus-modified copolyester contains the bifunctional phosphorus compound of the formula (II) in an amount of 0.1 to 5% by weight, preferably 0.2 to 0.8% by weight, based on the amount of phosphorus, in the polymer chain.

2. The uncoated fabric as claimed in claim 1, wherein its gas permeability is 12 to 80 dm³ of air per minute per square decimeter at a pressure drop of 500 Pa (measured as specified in DIN 53887).

3. The uncoated fabric as claimed in claim 1, wherein its gas permeability is less than or equal to 12 dm³ of air per minute per square decimeter at a pressure drop of 500 Pa (measured as specified in DIN 53887).

4. The uncoated fabric as claimed in claim 1, wherein this fabric consists of two thread systems, each of which comprises at least 95% of high-tenacity filament yarns made of phosphorus-modified copolyester.

5. The uncoated fabric as claimed in claim 1, wherein the high-tenacity polyester yarn has a tenacity of more than 55 cN/tex, and a breaking elongation of more than 15%.

6. The uncoated fabric as claimed in claim 1, wherein the high-tenacity polyester yarn has a heat shrinkage at 200°C of less than 9%.

7. The uncoated fabric as claimed in claim 1, wherein the high-tenacity polyester yarn is free of sizing.

8. The uncoated fabric as claimed in claim 1, wherein this has a plain weave, a ripstop weave, a cross twill weave, a crepe weave or a modified huckaback weave.

9. The uncoated fabric as claimed in claim 1, wherein this has a mass per unit area of less than 300 g/m² and a fabric thickness of less than 0.45 mm.

10. The uncoated fabric as claimed in claim 1, wherein this has a breaking force greater than 220 daN and a breaking elongation greater than 25%, both measured on a 5 cm-wide fabric strip.

11. The uncoated fabric as claimed in claim 1, wherein Ar¹ is phenylene or naphthylene, in particular 1,4-phenylene or 2,6-naphthylene.

12. The uncoated fabric as claimed in claim 1, wherein R¹ is a radical of the formula -CₙH₂ₙ-, in which n is an integer between 2 and 6, in particular ethylene, or is a radical derived from cyclohexanedimethanol.

13. The uncoated fabric as claimed in claim 1, wherein R² is a radical of the formula -CₘH₂ₘ-, in which m is an integer between 2 and 10, or a cyclic alkanediyl radical having 4 to 8, preferably 6, carbon atoms, and R³ is C₁-C₆alkyl, cyclohexyl, phenyl, or benzyl.

14. An airbag containing an uncoated fabric as claimed in claim 1.

15. Use of the fabric as claimed in claim 1 for manufacturing airbags.

## Revendications

1. Tissu non enduit, qui présente une perméabilité aux gaz inférieure ou égale à 80 dm³ d'air par minute et par décimètre carré, dans le cas d'une chute de pression de 500 Pa (mesurée selon DIN 53 887), et qui comporte au moins deux systèmes de fils parallèles constitués de fils continusà haute ténacité, à base de polyester ayant un titre de fil de 150 à 700 dtex, ainsi qu'un titre de fibre unitaire inférieur à 7 dtex, caractérisé en ce que le tissu est totalement ou seulement partiellement constitué de fils continus modifiés par du phosphore et à haute ténacité à base de polyester, le polyester étant un copolyester modifié par du phosphore, qui comporte les motifs structuraux répétitifs de formule I
-O-OC-Ar¹-CO-O-R¹- (I)
et comporte dans la chaîne polymère des groupes constitutifs de formule II 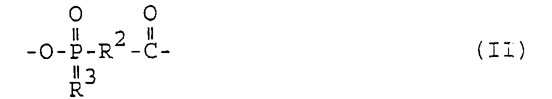 dans laquelle
Ar¹ représente un radical aromatique divalent comprenant un ou plusieurs noyaux;
R¹ est un radical aliphatique ou cycloaliphatique divalent,
R² est un radical aliphatique, cycloaliphatique, aromatique ou araliphatique divalent, et
R³ représente un radical aliphatique, cycloaliphatique ou araliphatique monovalent,
et en ce que le copolyester modifié par du phosphore contient dans la chaîne polymère le composé phosphoré bifonctionnel de formule (II) en une proportion de 0,1 à 5 % en poids, de préférence de 0,2 à 0,8 % en poids, rapporté à la quantité de phosphore.

2. Tissus non enduits selon la revendication 1, caractérisés en ce que leur perméabilité aux gaz va de 12 à 80 dm³ d'air par minute et par décimètre carré, dans le cas d'une chute de pression de 500 Pa (mesurée selon DIN 53 887).

3. Tissus non enduits selon la revendication 1, caractérisés en ce que leur perméabilité aux gaz est ≤ 12 dm³ d'air par minute et par décimètre carré, dans le cas d'une chute de pression de 500 Pa (mesurée selon DIN 53 887).

4. Tissus non enduits selon la revendication 1, caractérisés en ce qu'ils sont constitués de deux systèmes de fils qui consistent chacun à raison d'au moins 95 % en fils continus à haute ténacité, à base de copolyester modifié par du phosphore.

5. Tissus non enduits selon la revendication 1, caractérisés en ce que le fil de polyester à haute ténacité a une résistance à la traction, par rapport à la finesse, de plus de 55 cN/tex et un allongement à la traction maximale de plus de 15 %.

6. Tissus non enduits selon la revendication 1, caractérisés en ce que le fil de polyester à haute ténacité a un retrait à la chaleur, à 200°C, inférieur à 9 %.

7. Tissus non enduits selon la revendication 1, caractérisés en ce que le fil de polyester à haute ténacité est exempt d'encollage.

8. Tissus non enduits selon la revendication 1, caractérisés en ce qu'ils présentent une armoire toile, une armure reps, une armure croisée, une armure crêpe ou une armure oeil-de-perdrix modifiée.

9. Tissus non enduits selon la revendication 1, caractérisés en ce qu'ils présentent un poids par unité de surface inférieur à 300 g/m² et une épaisseur de tissu inférieure à 0,45 mm.

10. Tissus non enduits selon la revendication 1, caractérisés en ce qu'ils présentent une résistance à la traction de plus de 220 daN et un allongement à la force traction maximale de plus de 25 %, mesurés l'un et l'autre sur une bande de tissu de 5 cm de largeur.

11. Tissus non enduits selon la revendication 1, caractérisés en ce que Ar¹ représente le groupe phénylène ou naphtylène, en particulier le groupe 1,4-phénylène ou 2,6-naphtylène.

12. Tissus non enduits selon la revendication 1, caractérisés en ce que R¹ représente un radical de formule -CₙH₂ₙ-, dans laquelle n est un nombre entier compris entre 2 et 6, en particulier le groupe éthylène, ou un radical dérivé du cyclohexanediméthanol.

13. Tissus non enduits selon la revendication 1, caractérisés en ce que R² est un radical de formule -CₘH₂ₘ-, dans laquelle m est un nombre entier compris entre 2 et 10, ou un radical alcanediyle cyclique ayant de 4 à 8, de préférence 6 atomes de carbone, et en ce que R³ représente un groupe alkyle en C₁-C₆, cyclohexyle, phényle ou benzyle.

14. Coussin gonflable contenant un tissu non enduit selon la revendication 1.

15. Utilisation du tissu selon la revendication 1, pour la fabrication de coussins gonflables.
